# EUROPEAN PATENT SPECIFICATION

(11) **EP 2 537 356 B1**
(45) Date of publication and mention of the grant of the patent: **12.04.2023**
(21) Application number: 11741807.9
(22) Date of filing: 15.02.2011
(51) Int. Cl.: G06F 16/951, G06F 16/28

(54) **DEVICES AND METHOD FOR SEARCHING DATA ON DATA SOURCES ASSOCIATED WITH A CATEGORY**
VORRICHTUNGEN UND VERFAHREN ZUM SUCHEN VON DATEN AUF MIT EINER KATEGORIE ASSOZIIERTEN DATENQUELLEN
DISPOSITIFS ET PROCÉDÉ DE RECHERCHE DE DONNÉES SUR DES SOURCES DE DONNÉES ASSOCIÉES À UNE CATÉGORIE

(30) Priority: 23.04.2010 US 327355 P; 15.02.2010 US 304665 P
(43) Date of publication of application: 26.12.2012
(73) Proprietor: BlackBerry Limited, Waterloo, ON N2K 0A7 (CA)
(72) Inventor: KAUL, Bhavuk, Redwood City, CA 94065-1183 (US); NIRANJAN, Karthigesu, Kanata, Ontario K2K 2A5 (CA); BUBURAK, David, Kanata, Ontario K2K 3K2 (CA); IGNACZ, Jennifer, Waterloo, Ontario N2L 5R9 (CA); VYAS, Shilpa, Pinner Middlesex, HA5 5JF (GB); LINDSAY, Donald James, Waterloo, Ontario N2L 3W8 (CA)
(74) Representative: MERH-IP Matias Erny Reichl Hoffmann Patentanwälte PartG mbB
(86) International application number: PCT/CA2011/050092
(87) International publication number: WO 2011/097739

(56) References cited:
- WO-A2-2006/031307
- US-A1- 2005 080 771
- US-A1- 2005 149 496
- CHENG, JACQUI: 'Hands on review: iPhone OS 3.0 chock full of changes' ARS TECHNICA 2009 CONDÉ NAST DIGITAL, [Online] 17 June 2009, pages 1 - 5, XP008170805 Retrieved from the Internet: <URL:http://replay.web.archive.org/20090611 843111http://arstechnica. com/apple/rev ews/2009/06/hands-on-review-iphone-os-30-ch ock-full-of-changes.ars> [retrieved on 2011-05-10]
- "Mac OS X Leopard Overview : Mac OS X Leopard Dictionary", youtube, 9 July 2008 (2008-07-09), page 1 pp., XP054978034, Retrieved from the Internet: URL:https://www.youtube.com/watch?v=JskACc yZbMs [retrieved on 2018-01-17]
- Anonymous: "Metasearch engine - Wikipedia", , 19 January 2010 (2010-01-19), pages 1-3, XP055442253, Retrieved from the Internet: URL:https://en.wikipedia.org/w/index.php?t itle=Metasearch_engine&oldid=338810618 [retrieved on 2018-01-18]
- Anonymous: "Ultra-mobile PC", , 29 November 2006 (2006-11-29), pages 1-2, XP055201210, Retrieved from the Internet: URL:https://en.wikipedia.org/w/index.php?t itle=Ultra-mobile_PC&oldid=90824861 [retrieved on 2015-07-09]
- Anonymous: "Spotlight (software) - Wikipedia", , 21 June 2009 (2009-06-21), pages 1-4, XP055588965, Retrieved from the Internet: URL:https://en.wikipedia.org/w/index.php?t itle=Spotlight_(software)&oldid=297653666 [retrieved on 2019-05-15]
- Anonymous: "Exclude directory from Spotlight index via the command line", , 5 November 2009 (2009-11-05), pages 1-1, XP055503261, Retrieved from the Internet: URL:https://discussions.apple.com/thread/2 223487 [retrieved on 2018-08-29]
- Anonymous: "Improve Spotlight Searches with Search Operators in Mac OS X", , 6 January 2010 (2010-01-06), pages 1-3, XP055589179, Retrieved from the Internet: URL:http://osxdaily.com/2010/01/06/improve -your-spotlight-searches-with-search-opera tors/ [retrieved on 2019-05-16]
- Anonymous: "Access Wikipedia through Spotlight", , 19 November 2009 (2009-11-19), pages 1-2, XP055889511, Retrieved from the Internet: URL:https://web.archive.org/web/2009111903 2601/https://osxdaily.com/2009/11/16/acces s-wikipedia-through-spotlight/ [retrieved on 2022-02-09]

## Description

### Field of the invention

The present invention relates to the field of mobile wireless communications systems, and, more particularly, to methods of searching data on mobile wireless communications devices and related methods.

### Background of the invention

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices also allow users to send and receive electronic mail (email) messages wirelessly and access the Internet via a cellular network and/or a wireless local area network (WLAN), for example. In addition, these devices may allow users to send Short Messaging Service (SMS) messages, Personal Identification Number (PIN) messages, and instant messages.

Given the amount of information now stored on a mobile device itself, and the amount of data remotely accessible by the mobile device, a user may wish to search for a specific e-mail, media file, or contact, for example. To facilitate this, some applications that reside on a mobile device may permit users to search data managed by those applications and stored locally on the mobile device. For example, a messaging application may permit a user to search the contents of e-mail messages or text messages stored on the device, so that the user may locate messages containing a particular keyword. Other types of applications may also provide search capabilities. For example, a media player application that manages audio files (e.g. music files) stored on the device may permit a user to search information associated with music files, so that the user may find songs with a title or artist name containing a particular keyword. As a further example, an application used to manage photos stored on the device may permit a user to search photo descriptions for a particular keyword.

The invention is directed to address these issues and defined in the attached claims.

US 2005/149496 A1 concerns a system and a method for context-sensitive federated search of multiple information repositories.

Anonymous: "Access Wikipedia through Spotlight", 19 November 2009, retrieved from the Internet: URL:https:// web.archive.org/web/20091119032601/https://osxdaily.com/2009/11/16/ access-wikipedia-through-spotlight/ is related to handing over search requests from a universal element to applications.

### Brief Description of the Drawings

For a better understanding of the various embodiments described herein and to show more clearly how they may be carried into effect, reference will now be made, by way of example only, to the accompanying drawings which show at least one example embodiment and in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is a block diagram illustrating components of a host system in one example implementation;
FIG. 5 is a flowchart illustrating acts of a method of searching data, in accordance with at least one embodiment;
FIG. 6 is a flowchart illustrating acts performed to register an application associated with an external source of data, in accordance with at least one embodiment; and
FIGS. 7 to 10 are example screen captures of the display of a mobile device as it displays search result data in a user interface, in at least one example implementation.
FIG. 11 is a schematic block diagram of a mobile wireless communications device, in accordance with the present disclosure.
FIG. 12 is a flowchart of a method of operating the mobile wireless communications device of FIG. 11.
FIGS. 13A-13C illustrate an example search options screen presented on a mobile wireless communications device, in accordance with the present disclosure.

### Detailed Description

The present description is made with reference to the accompanying drawings, in which example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout, and prime notation is used to indicate similar elements or steps in alternative embodiments.

According to the invention, a mobile wireless communications device (also referred to herein as a mobile device) includes a display, at least one input device, and a processor coupled to the display and the at least one input device. The processor is configured to associate each of a plurality of search categories with each of a plurality of search data sources, based upon the at least one input device. The processor is also configured to determine a given search category of the plurality thereof associated with a search term input via the at least one input device, and search the search data source associated with the given search category for the search term, and generate search results based thereupon. The processor is further configured to display the search results on the display.

The processor is configured to determine the given search category associated with the search term by receiving input of the given search category via the at least one input device. A memory is configured to store application data, and at least one of the plurality of search data sources may comprise the application data.

In addition, at least one of the plurality of search data sources may comprise a web search engine. Also, at least one of the plurality of search data sources may comprise a media search engine. Further, at least one of the plurality of search data sources may comprise a vendor search engine.

The processor may be further configured to associate at least one further search data source with at least one of the plurality of search categories, and to search the at least one further data source for the search term based upon the at least one further search data source being associated with the given search category.

A method aspect is directed to a method for searching a mobile wireless communications device comprising a display, at least one input device, and a processor coupled to the display and the at least one input device. The method includes associating each of a plurality of search categories with each of a plurality of search data sources, based upon the at least one input device. The method also includes determining a given search category of the plurality thereof associated with a search term input via the at least one input device, using the processor. The method further includes searching the search data source associated with the given search category for the search term, and generate search results based thereupon, using the processor, and displaying the search results on the display.

Some embodiments of the systems and methods described herein make reference to a mobile device. A mobile device may be a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities), for example. A mobile device may communicate with other devices through a network of transceiver stations.

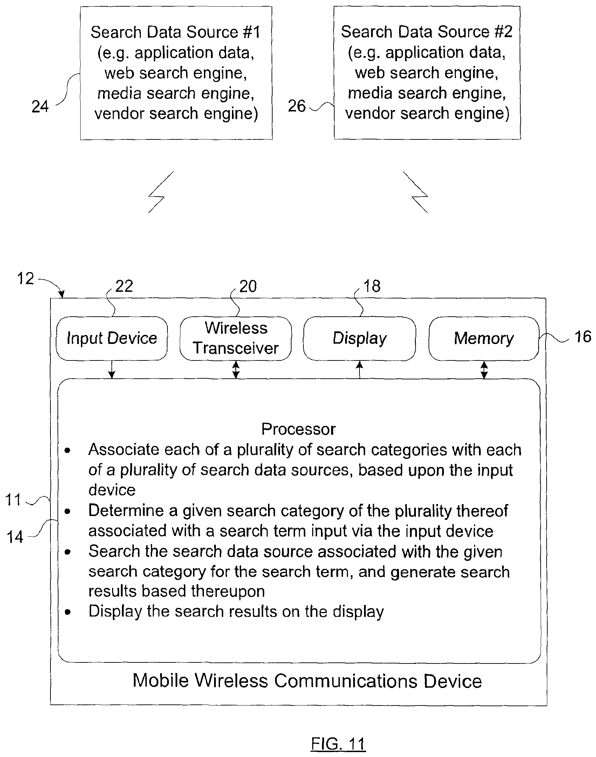

With initial reference to FIG. 11, a mobile wireless communications device 12, which can be used to implement the example embodiments disclosed herein, is now described. The mobile wireless communications device 12 comprises a housing 11 carrying a processor 14, memory 16, display 18, wireless transceiver 20, and input device 22. The memory 16, display 18, wireless transceiver 20, and input device 22 are coupled to the processor 14.

The wireless transceiver 20 may be a cellular transceiver, and may be configured to perform both voice and data cellular communications. The wireless transceiver 20 may also have other wireless communications capability, such as WiFi and Bluetooth. The input device 22 may be a keyboard, touch sensitive pad, trackball, thumbwheel, button, microphone, or other suitable device, for example. It should be appreciated that in some applications, the display 18 may be a touch sensitive display, and may therefore serve as the input device 22. The memory 16 may include both volatile and non-volatile portions.

The processor 16 is configured to associate each of a plurality of search categories with each of a plurality of search data sources 24, 26, based upon input received via the input device 22. Example search categories include e-mail, media, web, and shopping, although those of skill in the art will appreciate that any number of search categories may be present. Search data sources 24, 26 may include servers, such as web servers, and search engines associated therewith. For example, the search data sources 24, 26 may be web search engines, media search engines, or vendor search engines. The search data sources may also include sources stored in the memory 16, such as application data (e.g. stored e-mail messages, stored text messages, stored multimedia items, etc).

To associate the search categories with the search data sources, a search association screen may be presented on the display 18. This search association screen may list a variety of search categories, and may receive entry of a desired search data source or sources to associate with a given search category. Additionally or alternatively, the search association screen may receive selection of a desired search data source or sources to associate with a given search category based upon selection thereof from a drop down menu.

The processor 14 is also configured to determine a given search category of the plurality thereof that is associated with a search term that was input via the input device 22. According to the invention, the processor 14 makes this determination on its own via a suitable matching algorithm. The processor 14 then searches the search data source associated with the given search category for the search term, and generates search results based thereupon. The processor 14 then displays the search results on the display 18. This mobile wireless communications device 12 enables tailoring of searching to a user's preferences, thereby producing search results that are more likely to be useful.

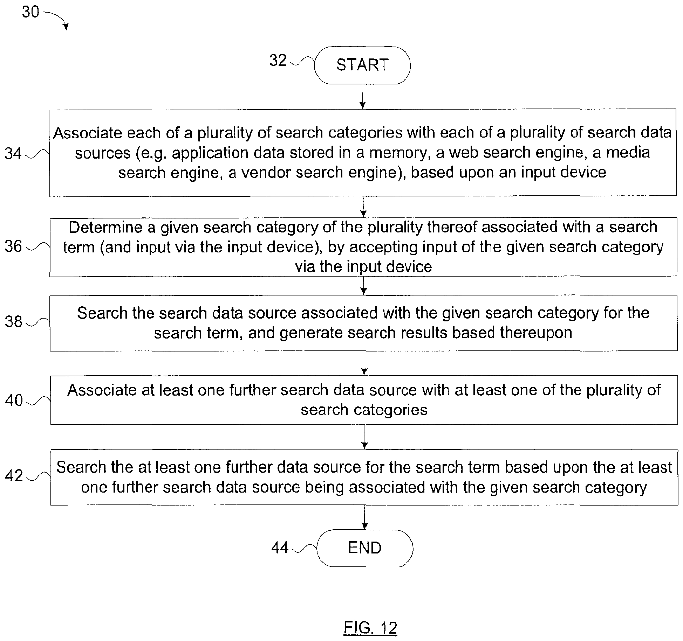

With reference to the flowchart 30 of FIG. 12, a method of operating the mobile wireless communications device of the present disclosure is now described. After the start (Block 32), each of a plurality of search categories is associated with each of a plurality of search data sources, based upon an input device (Block 34). Next, a given search category associated with a search term (that was input via the input device) is determined by receiving input of the given search category by the input device (Block 36). That it, it should be understood that the search term and the associated search category may be input via the input device at the same time.

The search data source associated with the given search category for the search term is then searched for the search term, and search results are generated base thereupon (Block 38). At least one further search data source may then be associated with at least one of the plurality of search categories (Block 40). The at least one further data source is then searched for the search term based upon the association (Block 42).

This feature of searching a further data source is particularly useful in that it allows multiple search data sources to be associated with a given search category. This may provide enhanced and more thorough search results.

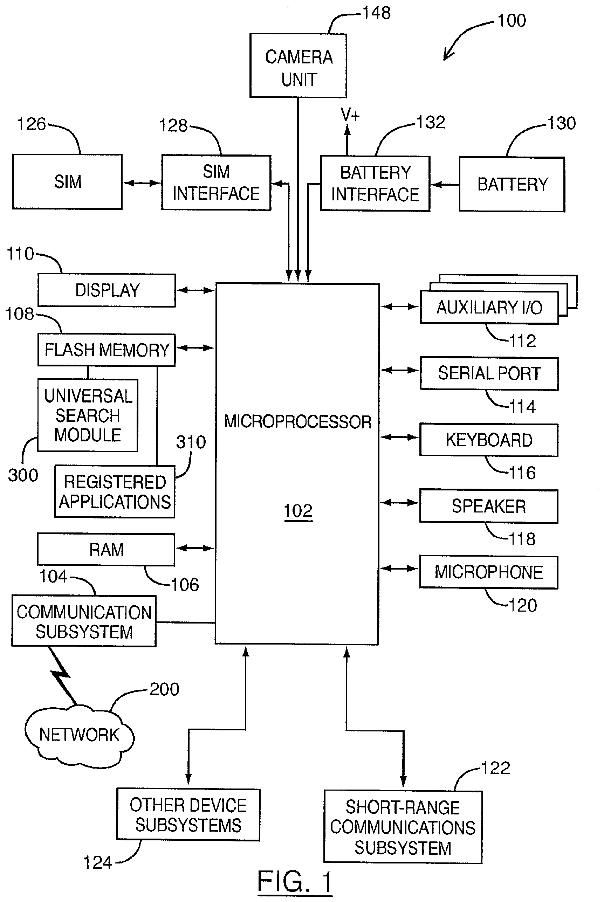

Referring first to FIG. 1, a block diagram of a mobile device, which can be used to implement the example embodiments disclosed herein, is shown generally as 100. Mobile device 100 comprises a number of components, the controlling component being microprocessor 102. Microprocessor 102 controls the overall operation of mobile device 100. Communication functions, including data and voice communications, may be performed through communication subsystem 104. Communication subsystem 104 may be configured to receive messages from and send messages to a wireless network 200. In one example implementation of mobile device 100, communication subsystem 104 may be configured in accordance with the Global System for Mobile Communication (GSM) and General Packet Radio Services (GPRS) standards. The GSM/GPRS wireless network is used worldwide and it is expected that these standards may be supplemented or superseded eventually by Enhanced Data GSM Environment (EDGE) and Universal Mobile Telecommunications Service (UMTS), and Ultra Mobile Broadband (UMB), etc. New standards are still being defined, but it is believed that they will have similarities to the network behavior described herein, and it will also be understood by persons skilled in the art that the embodiments of the present disclosure are intended to use any other suitable standards that are developed in the future. The wireless link connecting communication subsystem 104 with network 200 may represent one or more different Radio Frequency (RF) channels, operating according to defined protocols specified for GSM/GPRS communications. With newer network protocols, these channels may be capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems. Other network communication technologies that may be employed include, for example, Integrated Digital Enhanced Network (iDEN^{™}), Evolution-Data Optimized (EV-DO), and High Speed Packet Access (HSPA), etc.

Microprocessor 102 may also interact with additional subsystems such as a Random Access Memory (RAM) 106, flash memory 108, display 110, auxiliary input/output (I/O) subsystem 112, serial port 114, keyboard 116, speaker 118, microphone 120, camera unit 148, short-range communications subsystem 122 and other device subsystems 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, as well as device-resident functions such as a calculator or task list. Operating system software used by microprocessor 102 is typically stored in a persistent store such as flash memory 108, which may alternatively be a read-only memory (ROM) or similar storage element (not shown). Those skilled in the art will understand that the operating system, specific device applications, or parts thereof, may be temporarily loaded into a volatile store such as RAM 106.

Mobile device 100 may send and receive communication signals over network 200 after network registration or activation procedures have been completed. Network access may be associated with a subscriber or user of a mobile device 100. To identify a subscriber, mobile device 100 may provide for a Subscriber Identity Module ("SIM") card 126 (or e.g. USIM for UMTS, or CSIM or RUIM for CDMA) to be inserted in a SIM interface 128 in order to communicate with a network. SIM 126 may be one example type of a conventional "smart card" used to identify a subscriber of mobile device 100 and to personalize the mobile device 100, among other things. Without SIM 126, mobile device 100 may not be fully operational for communication with network 200. By inserting SIM 126 into SIM interface 128, a subscriber may access all subscribed services. Services may include, without limitation: web browsing and messaging such as e-mail, voice mail, Short Message Service (SMS), and Multimedia Messaging Services (MMS). More advanced services may include, without limitation: point of sale, field service and sales force automation. SIM 126 may include a processor and memory for storing information. Once SIM 126 is inserted in SIM interface 128, it may be coupled to microprocessor 102. In order to identify the subscriber, SIM 126 may contain some user parameters such as an International Mobile Subscriber Identity (IMSI). By using SIM 126, a subscriber may not necessarily be bound by any single physical mobile device. SIM 126 may store additional subscriber information for a mobile device as well, including date book (or calendar) information and recent call information.

Mobile device 100 may be a battery-powered device and may comprise a battery interface 132 for receiving one or more rechargeable batteries 130. Battery interface 132 may be coupled to a regulator (not shown), which assists battery 130 in providing power V₊ to mobile device 100. Although current technology makes use of a battery, future technologies such as micro fuel cells may provide power to mobile device 100. In some embodiments, mobile device 100 may be solar-powered.

Microprocessor 102, in addition to its operating system functions, enables execution of software applications on mobile device 100. A set of applications that control basic device operations, including data and voice communication applications, may be installed on mobile device 100 during its manufacture. Another application that may be loaded onto mobile device 100 is a personal information manager (PIM). A PIM may have functionality to organize and manage data items of interest to a subscriber, such as, but not limited to, e-mail, calendar events, voice mails, appointments, and task items. A PIM application may have the ability to send and receive data items via wireless network 200. PIM data items may be seamlessly integrated, synchronized, and updated via wireless network 200 with the mobile device subscriber's corresponding data items stored and/or associated with a host computer system. This functionality may create a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Applications may be stored in a memory or other storage on or coupled to mobile device 100, such as flash memory 108, for example. The applications may include, for example, a universal search module 300, the operation of which will be explained in more detail below. Data managed by applications may also be stored in a memory or other storage on or coupled to mobile device 100, such as flash memory 108, for example. The data may stored in, for example, a data structure 310 or other data store for storing data that identifies applications that have registered with the universal search module 300, as will be explained in more detail below.

Serial port 114 may enable a subscriber to set preferences through an external device or software application, and extend the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 may provide for communication between mobile device 100 and different systems or devices, without the use of network 200. For example, subsystem 122 may include an infrared device and associated circuits and components for short-range communication. Examples of short-range communication include standards developed by the Infrared Data Association (IrDA), Bluetooth^{®}, and the 802.11 family of standards (Wi-Fi^{®}) developed by IEEE.

In use, a received signal such as a text message, an e-mail message, or web page download may be processed by communication subsystem 104 and input to microprocessor 102. Microprocessor 102 then processes the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 may comprise an alphanumeric keyboard and/or telephone-type keypad, for example. Keyboard 116 may include a physical keyboard, or a virtual or "soft" keyboard implemented, for example, by way of images of keys rendered on a touch screen. A composed item may be transmitted over network 200 through communication subsystem 104.

For voice communications, the overall operation of mobile device 100 may be substantially similar, except that the received signals may be processed and output to speaker 118, and signals for transmission may be generated by microphone 120. Alternative voice or audio I/O subsystems, such as a voice message recording subsystem, may also be implemented on mobile device 100. Although voice or audio signal output may be accomplished primarily through speaker 118, display 110 may also be used to provide additional information such as the identity of a calling party, duration of a voice call, or other voice call related information.

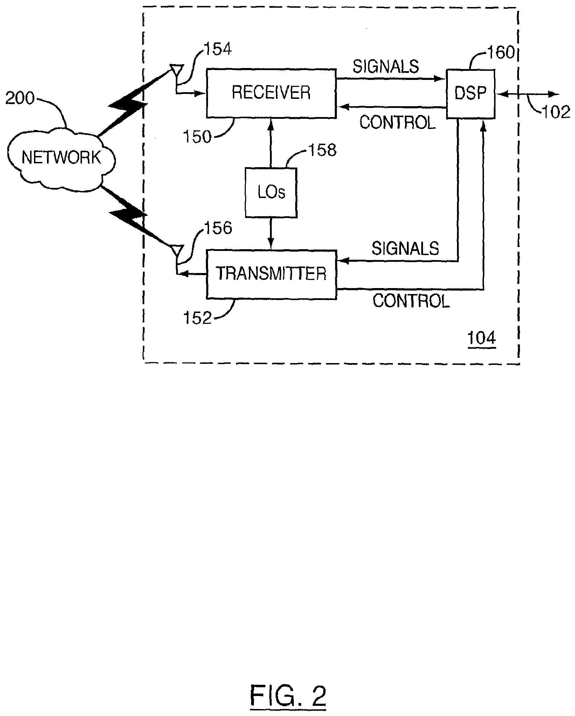

Referring now to FIG. 2, a block diagram of the communication subsystem component 104 of FIG. 1 is shown. Communication subsystem 104 may comprise a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 may be dependent upon the network 200 in which mobile device 100 is intended to operate; thus, it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is generally a limited resource, typically due to limits in overall bandwidth and limited battery power of mobile device 100.

When mobile device 100 is fully operational, transmitter 152 may be typically keyed or turned on only when it is sending to network 200 and may otherwise be turned off to conserve resources. Similarly, receiver 150 may be periodically turned off to conserve power until it is needed to receive signals or information (if at all) during designated time periods.

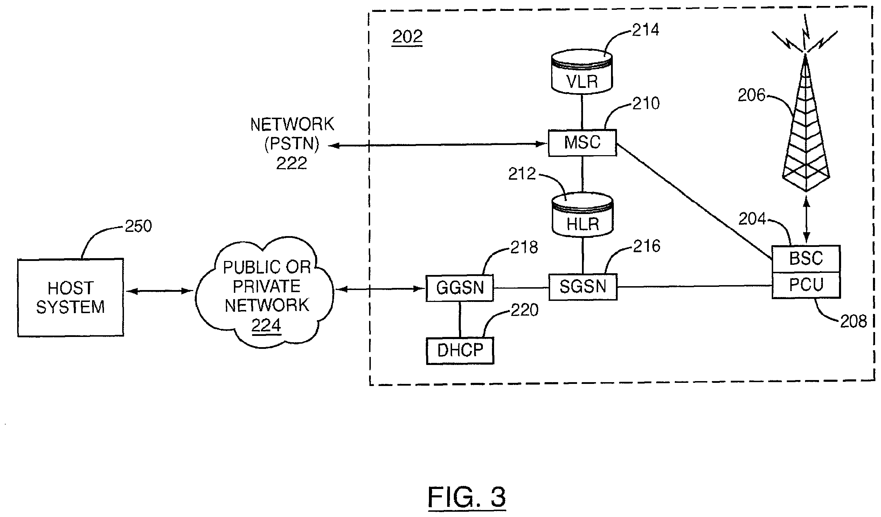

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with GPRS and GSM technologies; however, in other embodiments, different standards may be implemented as discussed in more detail above. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) server 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 may also contain a Packet Control Unit (PCU) 208 that connects to SGSN 216 to control segmentation, radio channel allocation and to satisfy packet switched requirements. To track mobile device location and availability for both circuit switched and packet switched management, HLR 212 may be shared between MSC 210 and SGSN 216. Access to VLR 214 may be controlled by MSC 210.

Station 206 may be a fixed transceiver station. Station 206 and BSC 204 together may form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile may be stored in HLR 212. HLR 212 may also contain location information for each registered mobile device and can be queried to determine the current location of a mobile device. MSC 210 may be responsible for a group of location areas, and may store the data of the mobile devices currently in its area of responsibility in VLR 214. Further, VLR 214 may also contain information on mobile devices that are visiting other networks. The information in VLR 214 may include part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times while requiring less use of computing resources.

SGSN 216 and GGSN 218 are elements that may be added for GPRS support; namely packet switched data support, within GSM. SGSN 216 and MSC 210 may have similar responsibilities within wireless network 200 by keeping track of the location of each mobile device 100. SGSN 216 also performs security functions and access control for data traffic on network 200. GGSN 218 may provide internetworking connections with external packet switched networks and connect to one or more SGSNs 216 via an Internet Protocol (IP) backbone network operated within the network 200. During normal operations, a given mobile device 100 may perform a "GPRS Attach" to acquire an IP address and to access data services. This normally is not present in circuit switched voice channels as Integrated Services Digital Network (ISDN) addresses may be generally used for routing incoming and outgoing calls. Currently, GPRS capable networks may use private, dynamically assigned IP addresses, using a DHCP server 220 connected to the GGSN 218. There are many mechanisms for dynamic IP assignment, including the use of a combination of a Remote Authentication Dial-In User Service (RADIUS) server and a DHCP server, for example. Once the GPRS Attach is complete, a logical connection may be established from a mobile device 100, through PCU 208, and SGSN 216 to an Access Point Node (APN) within GGSN 218, for example. The APN may represent a logical end of an IP tunnel that can either access direct Internet compatible services or private network connections. The APN may also represent a security mechanism for network 200, insofar as each mobile device 100 is assigned to one or more APNs, and mobile devices 100 cannot generally exchange data without first performing a GPRS Attach to an APN that it has been authorized to use. The APN may be considered to be similar to an Internet domain name such as "myconnection.wireless.com".

Once the GPRS Attach is complete, a tunnel may be created and all traffic exchanged within standard IP packets using any protocol that can be supported in IP packets. This may include tunneling methods such as IP over IP as in the case with some IPSecurity (IPsec) connections used with Virtual Private Networks (VPN). These tunnels are also referred to as Packet Data Protocol (PDP) Contexts and there may be a limited number of these available in the network 200. To maximize use of the PDP Contexts, network 200 will run an idle timer for each PDP Context to determine if there is a lack of activity. When a mobile device 100 is not using its PDP Context, the PDP Context may be deallocated and the IP address returned to the IP address pool managed by DHCP server 220.

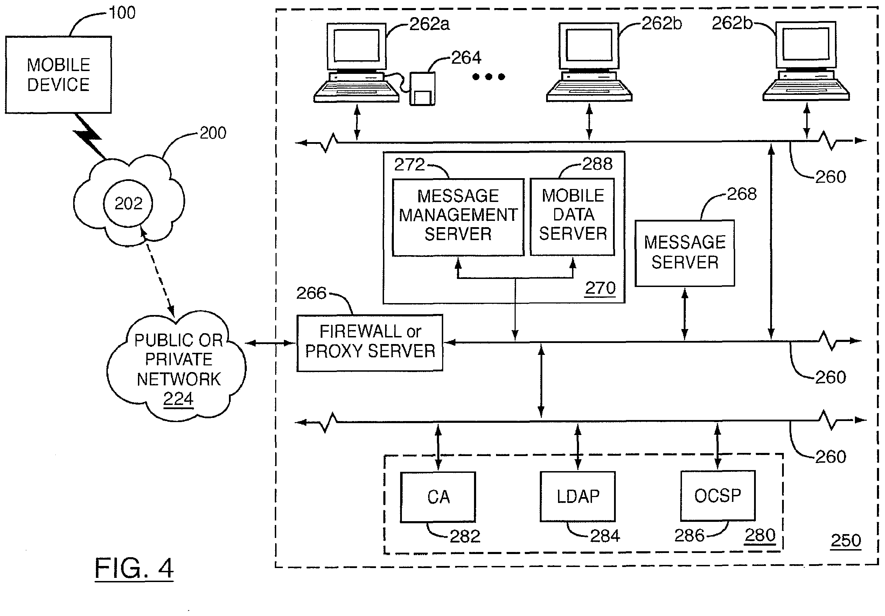

Referring now to FIG. 4, a block diagram illustrating components of a host system in one example configuration is shown. Host system 250 will typically be a corporate office or other local area network (LAN), but may instead be a home office computer or some other private system, for example, in variant implementations. In this example shown in FIG. 4, host system 250 is depicted as a LAN of an organization to which a user of mobile device 100 belongs.

LAN 250 comprises a number of network components connected to each other by LAN connections 260. For instance, a user's desktop computing device ("desktop computer") 262a with an accompanying cradle 264 for the user's mobile device 100 may be situated on LAN 250. Cradle 264 for mobile device 100 may be coupled to computer 262a by a serial or a Universal Serial Bus (USB) connection, for example. Other user computers 262b are also situated on LAN 250, and each may or may not be equipped with an accompanying cradle 264 for a mobile device. Cradle 264 facilitates the loading of information (e.g. PIM data, private symmetric encryption keys to facilitate secure communications between mobile device 100 and LAN 250) from user computer 262a to mobile device 100, and may be particularly useful for bulk information updates, often performed when initializing mobile device 100 for use. The information downloaded to mobile device 100 may include Secure/Multipurpose Internet Mail Extensions (S/MIME) certificates or Pretty Good Privacy (PGP) keys used in the exchange of messages, for example.

It will be understood by persons skilled in the art that user computers 262a, 262b will typically be also connected to other peripheral devices not explicitly shown in FIG. 4. Furthermore, only a subset of network components of LAN 250 are shown in FIG. 4 for ease of exposition, and it will be understood by persons skilled in the art that LAN 250 will comprise additional components not explicitly shown in FIG. 4, for this example configuration. More generally, LAN 250 may represent a smaller part of a larger network [not shown] of the organization, and may comprise different components and/or be arranged in different topologies than that shown in the example of FIG. 4.

In this example, mobile device 100 communicates with LAN 250 through a node 202 of wireless network 200 and a shared network infrastructure 224 such as a service provider network or the public Internet. Access to LAN 250 may be provided through one or more routers [not shown], and computing devices of LAN 250 may operate from behind a firewall or proxy server 266.

In a variant implementation, LAN 250 comprises a wireless VPN router [not shown] to facilitate data exchange between the LAN 250 and mobile device 100. The concept of a wireless VPN router is new in the wireless industry and implies that a VPN connection can be established directly through a specific wireless network to mobile device 100. The possibility of using a wireless VPN router has only recently been available and could be used when the new Internet Protocol (IP) Version 6 (IPV6) arrives into IP-based wireless networks. This new protocol may provide enough IP addresses to dedicate an IP address to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection may include, for example, a Transmission Control Protocol (TCP)/IP or User Datagram Protocol (UDP)/IP connection to deliver the messages directly to mobile device 100 in this variant implementation.

Messages intended for a user of mobile device 100 may be initially received by a message server 268 of LAN 250. Such messages may originate from any of a number of sources. For instance, a message may have been sent by a sender from a computer 262b within LAN 250, from a different mobile device [not shown] connected to wireless network 200 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. In some implementations, LAN 250 may comprise multiple message servers 268. Message server 268 may also be configured to provide additional functions beyond message management, including the management of data associated with calendars and task lists, for example.

When messages are received by message server 268, they are typically stored in a message store [not explicitly shown], from which messages can be subsequently retrieved and delivered to users. For instance, an e-mail client application operating on a user's computer 262a may request the e-mail messages associated with that user's account stored on message server 268. These messages may then typically be retrieved from message server 268 and stored locally on computer 262a.

When operating mobile device 100, the user may wish to have e-mail messages retrieved for delivery to the mobile device 100. An e-mail client application operating on mobile device 100 may request messages associated with the user's account from message server 268. The e-mail client may be configured (either by the user or by an administrator, possibly in accordance with an organization's information technology (IT) policy) to make this request at the direction of the user, at some pre-defined time interval, or upon the occurrence of some pre-defined event. In some implementations, mobile device 100 is assigned its own e-mail address, and messages addressed specifically to mobile device 100 may be automatically redirected to mobile device 100 as the message server 268 receives those messages.

To facilitate the wireless communication of messages and message-related data between mobile device 100 and components of LAN 250, a number of wireless communications support components 270 may be provided. In this example implementation, wireless communications support components 270 may comprise a message management server 272, for example. Message management server 272 may be used to specifically provide support for the management of messages, such as e-mail messages, that are to be handled by mobile devices. Generally, while messages are still stored on message server 268, message management server 272 may be used to control when, if, and how messages should be sent to mobile device 100. Message management server 272 may also facilitate the handling of messages composed on mobile device 100 that are sent to message server 268 for subsequent delivery.

For example, message management server 272 may: monitor the user's "mailbox" (e.g. the message store associated with the user's account on message server 268) for new e-mail messages; apply user-definable filters to new messages to determine if and how the messages will be relayed to the user's mobile device 100; compress and encrypt new messages (e.g. using an encryption technique such as Data Encryption Standard (DES) or Triple DES) and push them to mobile device 100 via the shared network infrastructure 224 and wireless network 200; and receive messages composed on mobile device 100 (e.g. encrypted using Triple DES), decrypt and decompress the composed messages, re-format the composed messages if desired so that they will appear to have originated from the user's computer 262a, and re-route the composed messages to message server 268 for delivery.

Certain properties or restrictions associated with messages that are to be sent from and/or received by mobile device 100 can be defined (e.g. by an administrator in accordance with IT policy) and enforced by message management server 272. These may include whether mobile device 100 is permitted to receive encrypted and/or signed messages, minimum encryption key sizes, whether outgoing messages must be encrypted and/or signed, and whether copies of all secure messages sent from mobile device 100 are to be sent to a pre-defined copy address, for example.

Message management server 272 may also be configured to provide other control functions, such as only pushing certain message information or pre-defined portions (e.g. "blocks") of a message stored on message server 268 to mobile device 100. For example, when a message is initially retrieved by mobile device 100 from message server 268, message management server 272 is configured to push only the first part of a message to mobile device 100, with the part being of a pre-defined size (e.g. 2 KB). The user can then request more of the message, to be delivered in similar-sized blocks by message management server 272 to mobile device 100, possibly up to a maximum pre-defined message size.

Accordingly, message management server 272 may facilitate better control over the type of data and the amount of data that is communicated to mobile device 100, and can help to minimize potential waste of bandwidth or other resources.

It will be understood by persons skilled in the art that message management server 272 need not be implemented on a separate physical server in LAN 250 or other network. For example, some or all of the functions associated with message management server 272 may be integrated with message server 268, or some other server in LAN 250. Furthermore, LAN 250 may comprise multiple message management servers 272, particularly in variant implementations where a large number of mobile devices are supported.

Standard e-mail security protocols typically facilitate secure message transmission between non-mobile computing devices (e.g. computers 262a, 262b of FIG. 4; remote desktop devices). In order that signed messages received from senders may be read from mobile device 100 and that encrypted messages be sent from mobile device 100, mobile device 100 may be configured to store public keys (e.g. in S/MIME certificates, PGP keys) of other individuals. Keys stored on a user's computer 262a may be downloaded from computer 262a to mobile device 100 through cradle 264, for example.

Mobile device 100 may also be configured to store the private key of a public key/private key pair associated with the user, so that the user of mobile device 100 can sign outgoing messages composed on mobile device 100, and decrypt messages sent to the user encrypted with the user's public key. The private key may be downloaded to mobile device 100 from the user's computer 262a through cradle 264, for example. The private key may be exchanged between the computer 262a and mobile device 100 so that the user may share one identity and one method for accessing messages.

User computers 262a, 262b can obtain S/MIME certificates and PGP keys from a number of sources, for storage on computers 262a, 262b and/or mobile devices (e.g. mobile device 100) in a key store, for example. The sources of these certificates and keys may be private (e.g. dedicated for use within an organization) or public, may reside locally or remotely, and may be accessible from within an organization's private network or through the Internet, for example. In the example shown in FIG. 4, multiple public key infrastructure (PKI) servers 280 associated with the organization reside on LAN 250. PKI servers 280 may include a certificate authority (CA) server 282 that may be used for issuing S/MIME certificates, a Lightweight Directory Access Protocol (LDAP) server 284 that may be used to search for and download S/MIME certificates and/or PGP keys (e.g. for individuals within the organization), and an Online Certificate Status Protocol (OCSP) server 286 that may be used to verify the revocation status of S/MIME certificates, for example.

Certificates and/or PGP keys may be retrieved from LDAP server 284 by a user computer 262a, for example, to be downloaded to mobile device 100 via cradle 264. However, in a variant implementation, LDAP server 284 may be accessed directly (i.e. "over the air" in this context) by mobile device 100, and mobile device 100 may search for and retrieve individual certificates and PGP keys through a mobile data server 288. Similarly, mobile data server 288 may be configured to allow mobile device 100 to directly query OCSP server 286 to verify the revocation status of S/MIME certificates.

In variant implementations, only selected PKI servers 280 may be made accessible to mobile devices (e.g. allowing certificates to be downloaded only from a user's computer 262a, 262b, while allowing the revocation status of certificates to be checked from mobile device 100).

In variant implementations, certain PKI servers 280 may be made accessible only to mobile devices registered to particular users, as specified by an IT administrator, possibly in accordance with an IT policy, for example.

Other sources of S/MIME certificates and PGP keys [not shown] may include a Windows certificate or key store, another secure certificate or key store on or outside LAN 250, and smart cards, for example.

As noted above, microprocessor 102, in addition to its operating system functions, enables execution of software applications on mobile device 100. These software applications typically include applications that control basic device operations, and may also include a wide range of other applications that have been loaded onto mobile device 100. The types of applications that can be supported by mobile device 100 can vary widely, and may include, without limitation, messaging applications (e.g. e-mail messaging, text messaging, instant messaging), media applications (e.g. video players, media streaming, picture editing or photo management applications, audio players), contact management applications, calendar applications, and so on. Each application may manage data that is stored, for example, directly on mobile device 100 (e.g. in flash memory 108). Alternatively, the data may be stored on some storage device or memory coupled to mobile device 100, either by data cable or wirelessly. Some applications may be pre-loaded onto the mobile device 100 so that they are available for use by a user of mobile device 100 upon his or her acquisition of the device, while other applications may be loaded onto mobile device 100 at some later time.

According to the invention, an application that has been loaded on mobile device 100 may permit users to search data managed by that application. In order to perform the search, a user may need to open that application, and select a "search" option from a menu, for example, to initiate the search of the data managed by the application.

In accordance with the invention, a universal search module (e.g. universal search module 300 of FIG. 1) is provided. In operation, a microprocessor of a mobile device (e.g. microprocessor 102 of mobile device 100 of FIG. 1) executes instructions of the universal search module, which implements a search engine that facilitates a search of data made available by each of multiple applications. A search term is received from a user via a user interface provided by the universal search module, and subsequently, a search of data from multiple data sources based on that search term can be performed, with results being presented to the user via the user interface as search result data, in some format.

The universal search module may allow data managed by any of a variety of applications, which do not need to appear closely related, to be contemporaneously searched. For example, a keyword, or a subset of characters in the keyword, can form the basis of a search of not only message data stored on the mobile device being managed by a messaging application, but also song titles and artist names that have been associated with audio files stored on the mobile device. The user need not open separate applications in order to search data being managed by each different application, which may enhance user convenience.

In accordance with the invention, the microprocessor is configured to initiate searches, not only of data stored on the mobile device, but also data originating from "external" or "off-device" sources. In at least one embodiment, data retrieved from the external data sources may be indexed and stored on the mobile device to facilitate more efficient searching in subsequent searches.

Accordingly, the microprocessor may be configured to search both "local" sources of data (i.e. data already stored on the mobile device) and data originating from external sources contemporaneously, in response to a search initiated by a user through the user interface of the universal search module. This may increase usability and user flexibility, as the breadth of the searches being performed can significantly increase.

In accordance with another broad aspect, the microprocessor is configured to allow searching by category. Each category may be potentially associated with a plurality of (e.g. third-party) external data sources, for example. For example, the universal search module may be configured to allow users to perform searches corresponding with one or more of the following categories, by way of illustration and without limitation: web site searches using web search engines, searches of data managed by social networks, news searches, web messaging searches, media retail site searches, map website searches, coupon searches, and others. In some embodiments, the search by category may also cause local (e.g. on-device) data sources to be searched, in addition to or alternatively to the external data sources.

In at least one embodiment, the user may be permitted to define user preferences to specify one or more "preferred" sources for searching a specific content type (e.g. to specify a particular search engine as the preferred source when a "web search" is to be performed, or to specify a particular map website as the preferred source when a "map search" is to be performed). This allows a user to customize, in advance, the external data source(s) (and in some embodiments, possibly one or more local data sources) to be searched by default, when a search by category is subsequently performed.

In accordance with another broad aspect, the universal search module provides an application programming interface (API) that is made accessible to the various software applications executing on mobile device 100. This API allows applications (e.g. applications associated with local data sources, applications associated with external data sources, or both) to interact with the universal search module so that the data provided by the respective data sources may be made available for searching.

In at least one embodiment, the mobile device is configured to allow applications, which have not been pre-loaded on the device, to be downloaded to the mobile device (e.g. via the shared network infrastructure 224 of FIG. 3). According to the invention, these applications may be associated with one or more external sources of data, and may be configured to make data available to the universal search module for searching. In at least one embodiment, an application associated with at least one external data source may be permitted to register with the universal search module, so that the external source(s) of data can be searched, in response to a search initiated by a user through the user interface of the universal search module.

These and other aspects and features of various embodiments will be described in greater detail below.

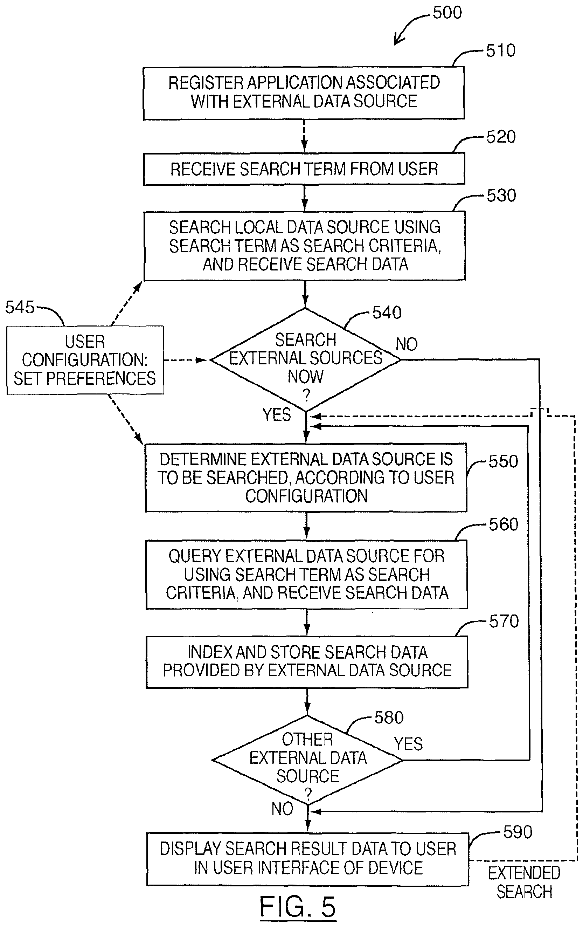

Reference is now made to FIG. 5, in which a flowchart illustrating acts of a method of searching data is shown generally as 500, in accordance with at least one embodiment.

In at least one embodiment, at least some of the acts of method 500 are performed by a processor (e.g. microprocessor 102 of FIG. 1) executing instructions of an application (e.g. comprising one or more application modules, such as a "universal search module" in the examples described herein) residing on a mobile device (e.g. mobile device 100 of FIG. 1). A user of the mobile device may initiate a search using the universal search module (e.g. universal search module 300 of FIG. 1), which is configured to permit searching of both "locally" stored data (i.e. data stored on the mobile device) and certain external sources of data associated with applications that have registered with the universal search module, as described herein.

At 510, an application that is associated with an external source of data registers with the universal search module on the mobile device. The application may be a proprietary application originating from the manufacturer of the mobile device, or a "third-party" application that is provided by an entity other than the manufacturer, for example.

Many different types of potential external data sources exist. For example, data may be provided by a third-party web search engine, wherein web pages may be identified in a search. As a further example, data may be provided by a file sharing website, wherein songs, videos, or other multimedia may be provided and identified in a search. As a further example, data may originate from a news feed or a news website, wherein news articles, headlines, and other related news content may be identified in a search. As further examples, and without limitation, social networking sites, data feeds, map websites, web messaging applications, merchant websites, web directories, network databases, Web servers, enterprise servers (e.g. message management server 272), and engines that draw from any number of multiple data sources, which may incorporate a combination of some or all of the previously mentioned sources, may also provide data that can be subject to search, for example.

When an application is downloaded to the mobile device, the application may be configured to register with the universal search module, so that the external source of data with which the application is associated may be accessed when a search is subsequently initiated at the mobile device. Accordingly, searches of the external data source may be performed without the need for the user to independently navigate the external data source directly (e.g. to visit the website) or to run the application on the mobile device.

For example, the user may download an application associated with a music store, wherein the application provides access to a catalog containing song titles, album titles, artist names, and other data that can be searched. By registering the music store application with the universal search module, the contents of the catalog can be searched by the module without requiring the user to access the music store's website (e.g. using a browser) or to independently run the music store application to perform the search.

According to the invention, applications are registered with the universal search module. Once an application is registered, it may make data from the data source (e.g. local or external) associated with the application available for search.

Registering an application with the universal search module may be required in order to confirm that the application is permitted to provide data from its associated data source for searching. This may be desirable particularly where the application is a third-party application, and where certain controls are desirable to maintain device security. For example, an administrator or a user of the mobile device may wish to control, and approve, which third party applications may provide data to the universal search module for searching, independent of whether the applications might be permitted to reside and execute on the mobile device.

In accordance with at least one embodiment, the universal search module provides a specialized API that is made accessible to registered applications. Through this interface, the universal search module can communicate with the registered applications that provide access to data sources (e.g. external data sources) for searching. The act of registering an application with the universal search module may involve verifying that the application can properly interface with the specialized API.

The specialized API may have access control privileges (e.g. internal, public). Applications seeking access to the API may be verified using a code signing process, and a security check may be performed on the calling application at runtime.

According to the invention, each application can also set its own access control privileges, for its associated data at registration time. Based on how the access control privileges for the given application itself are set, other registered applications on the mobile devices may be permitted to query the data of that given application.

As noted above, the act of registering an application generally makes the data associated with the application available for search. The registration act 510 may involve other acts, in variant embodiments. For example, registration may comprise acts that facilitate the identification and reporting of "bad" applications (e.g. applications that are misusing the API, applications that are utilizing an excess amount of processing resources, etc.).

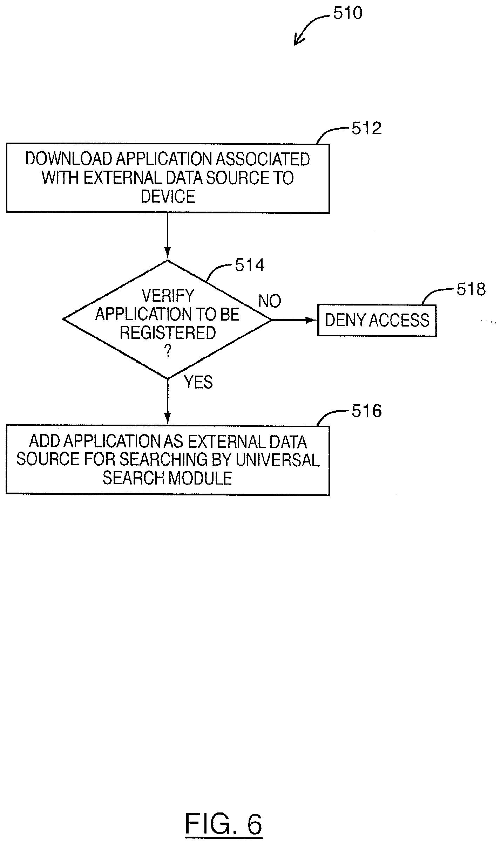

FIG. 6 is a flowchart illustrating acts performed in registering an application as an external data source, in accordance with at least one embodiment. These acts may be performed at 510 of FIG. 5, for example.

At 512, the application associated with the external data source is downloaded to the mobile device. The download may be initiated by the user, for example.

In at least one embodiment, the downloaded application is configured to trigger the registration process after its initialization, where the application wishes to utilize the specialized API provided by the universal search module, and allow access to its associated data.

At 514, verification that the application downloaded at 512 is to be registered, is performed. This may involve, for example, determining if the application is permitted to provide external data to the universal search module. For example, verification that the application has been "authorized" by the mobile device manufacturer, by being signed through a code signing process, may be performed.

If the downloaded application is to be registered, then at 516, the downloaded application is added to the list of applications that can provide searchable data to the universal search module. A data structure (e.g. registered applications data structure 310 of FIG. 1) may be employed to keep track of applications that are registered with the universal search module. According to the invention, if an application is registered, the application may be called upon by the universal search module to cause a search of the associated external data source to be made, in response to the initiation of a search (e.g. by a user) at the mobile device. The data source may then also be identified in option screens and search result screens, to be displayed in the user interface provided by the universal search module.

In some embodiments, a downloaded application must be both "registered" and "activated" before it may provide data from the external data source to the universal search module. In this case, a user may be required to provide a separate user confirmation after an application is registered in order to activate the application, before the external data source can be searched. In other embodiments, once registered, the external data source may be made searchable by default, until a user subsequently exercises an "opt-out" or "deactivation" option. Once a registered application is deactivated, the external data source is not subject to search, temporarily, until the application is re-activated.

In some embodiments, a list may be displayed at the user's direction in the user interface of the mobile device, showing which registered applications have been activated at any given time, and permitting the deactivation and reactivation of particular applications.

If it is determined, at 514, that the application is not to be registered, then at 518, the application is denied access to the functionality provided by the universal search module.

In one embodiment, the universal search module may permit users to configure (e.g. at 545) whether a registered application may provide data from its associated external data source not only to the universal search module, but also to one or more other registered applications other than the universal search module, for searching purposes. The configuration may also be controlled by an administrator, through a security policy (e.g. IT policy), for example.

As an illustration, consider an application that provides access to a restaurant directory, which has been registered at 510. The application may be configured to not only permit the universal search module to search the contents of the restaurant directory, but also to allow other registered applications to search those contents as well. For example, the restaurant directory application may be configured to allow all other registered applications on the mobile device, including a meal reservation application for instance, to search the restaurant directory. As a further example, the restaurant directory application may permit access to the restaurant directory by some applications (e.g. the meal reservation service), but not others (e.g. an application that provides users with restaurant reviews).

In one embodiment, a given application allows its associated data to be accessible to other registered applications executing on the mobile device by appropriately setting its access control privileges, and informing the universal search module accordingly during the registration process. The other applications would then be permitted to make requests for data, via the universal search module, from all available data sources (e.g. all data sources, or select sources based on content type) associated with the given application, and query the data sources for data.

Referring again to FIG. 5, acts 520 to 590 are performed when a search is initiated by a user, through the user interface of the universal search module, for example. In this example, at least one application associated with an external data source has been registered at 510.

At 520, a search term is received from the user, through the user interface. A search may be performed on the received search term, even if the search term has not yet been entered in its entirety, from the user's perspective. For example, the user may wish to search for items containing the text "colleen" or "coleen", but may initially be unsure of the spelling. When the user types in a few characters, e.g. "col", in the user interface and pauses during data entry, subsequent acts of the searching method (e.g. acts 520 to 590) may be initiated using "col" as the search term. If the user then types in additional letters (e.g. "leen"), the search may be interrupted, with the flow of methods acts reverting back to step 520. The search may then continue with the expanded search term.

In some embodiments, the search is performed as a user types in a search term in the user interface. It may or may not be necessary for the user to explicitly click a search icon or to otherwise direct that a search be initiated before a search is commenced, depending on the configuration of the universal search module.

At 530, a search is initiated on data stored locally on the mobile device, based on the search term received at 520. Locally stored data may include for example, without limitation: still images and/or videos and associated data, message data (e.g. e-mail, text, instant), calendar data, audio files and associated data, program and/or utility names, and help documentation.

The user may be permitted to set user preferences (e.g. at 545), through user settings provided by the universal search module, that define what types of data (e.g. photos, message data, etc.) may be searched. Particular storage locations may also be specified for the search, in some embodiments. Otherwise, a general search of data, not restricted to particular types of data or storage locations, may be initiated. The user may be permitted to configure the universal search module to include data in encrypted data files (e.g. the user may be prompted for an access password) for searching, in certain embodiments.

At 540, a determination is made as to whether one or more external sources of data are to be automatically searched using the search term received at 520. The determination may require verifying user settings (e.g. as set by a user at 545). For example, the user configuration may indicate that the external data sources are to be automatically searched in additional to the local data sources, once the search term is received from the user in the user interface of the universal search module, without requiring further user direction. The outcome of the determination may also depend on a security policy (e.g. an IT policy) that governs the use of the mobile device. For example, an administrator may wish to control, through IT policy, that no external sources of data are to be accessed by the particular mobile device, or that only certain specified external sources of data may be accessed. Settings provided by the IT policy may be given priority over any user-defined settings.

In other embodiments, a search of an external data sources may only be permitted after a user has clicked or otherwise selected an icon representing the external data source in the user interface of the universal search module.

If it is determined that the external sources of data are to be automatically searched, then the flow of method acts proceeds to 550. Otherwise, the flow of method acts proceeds to 590, where the results of the search of locally stored data are displayed as search result data, to the user in the user interface.

Acts 550 to 580 are performed for each external source of data to be searched. First, act 550 is performed for a given external data source. It will be understood by persons skilled in the art that the search of external data sources may be initiated even if the search of local data sources in 530 has not yet been completed. In other words, searches of the external data sources and local data sources may be performed concurrently, in certain embodiments.

In some embodiments, the user may be able to "de-activate" an application that might otherwise search its associated external data source when instructed by the universal search module. Accordingly, at 550, user preferences (e.g. as set at 545) are verified, and confirmation that the user (or an administrator via IT policy, for example) has not excluded the given external data source from being searched may be made. If the given external data source is to be excluded, then the flow of method acts will proceed to 580 [flow not explicitly shown] so that the next external data source may be considered.

In some embodiments, for step 530 or 550, the user may have initiated a search "by category", which directs the universal search module to initiate a search of certain local or external data sources that are considered to relate to the specified category. The term "category" is also referred to interchangeably herein as a "content type", as both terms imply a grouping of data sources based on the type of information content provided by the data sources. For example, a user may initiate a search "emails from John Doe", wherein email is the category. Example data sources associated with the email category can be Gmail mail, Yahoo email and Microsoft Outlook emails, In an another example, a user may initiate a search "songs by Arcade Fire", wherein songs is the category. Data sources associated with the songs category are for example Amazon media, AT&T Music Store and Slacker.

For example, a "web search" category may be provided. In one embodiment, when a search by this category is initiated, one or more third-party search engines that provide web search capabilities (e.g. Yahoo!^{®}, Google^{™}, etc.) may be invoked. As a further example, a "web mail" category may be provided. In one embodiment, when a search by this category is initiated, messages stored off-device, as managed by one or more messaging service providers (e.g. Yahoo!O Mail, Gmail^{™}, Windows Live^{™} Hotmail) may be searched. Other categories may be made available as search categories, including for example, without limitation: social networks, news searches, media retail site searches, map website searches, coupon searches, and others.

According to the invention, the data sources associated with one or more categories change depending on the current location of the mobile device. In some embodiments, this may require that the mobile device be GPS-enabled. In these embodiments, the data sources associated with one or more categories may change dynamically in response to a change in the location of the mobile device. Alternatively, the location may be determined by the location as indicated in user settings on the mobile device.

As an example, different search engines may be associated with a "web search" category, depending if the mobile device is operating in the United States or in China. Other data sources associated with a different category may differ as well, depending on where the mobile device is operating.

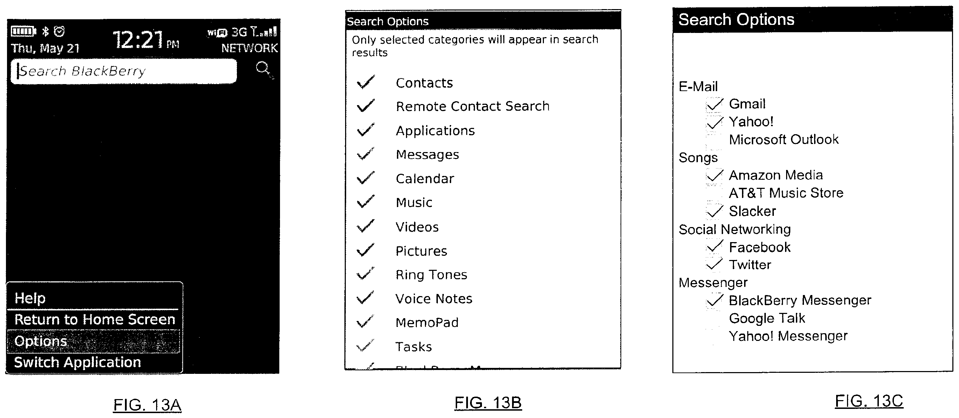

An example user preferences page is shown in FIG. 13B. This user preferences page is accessed by selecting "options" in the menu shown in FIG. 13A, and provides an option to include what kind of search result items (e.g. contacts, applications, messages) are to be included with the search results.

It should be appreciated that custom categories may also be defined by a user, wherein the user may associate one or more external data sources, one or more local data sources, or a combination of local and external data sources, with each custom category. These custom categories may be defined in the user preferences set by the user. FIG. 13C shows a user preference screen with custom categories, For example, in the E-mail category, there are options to search Gmail, Yahoo! Mail, and Microsoft Outlook. Here, GMail and Yahoo! have been selected, as indicated by the check marks in the boxes adjacent those options, but Microsoft Outlook has not been selected. Therefore, when searching for e-mail messages, Gmail and Yahoo! will be searched, but not Microsoft Outlook. Also shown are other categories with selectable data sources, such as the Songs, Social Networking, and Messenger categories.

In some embodiments, when searching by category, the universal search module may be configured to search all of the data sources (e.g. all of the external data sources) associated with a user-selected category, which have registered with the universal search module.

According to the invention, the universal search module is configured to search only a strict subset of the external data sources associated with the user-selected category when a search by category is initiated. The subset may be defined in user preferences, which may be configured by an administrator through a security policy, in some embodiments. In other embodiments, the user may set user preferences during user configuration, at 545. The user may be permitted to select the subset of data sources to be searched when a search by category is performed.

In at least one embodiment, the user may be permitted to define user preferences to specify a "preferred" source for searching a specific content type (e.g. to specify a particular search engine as the preferred source when a search under a "web search" category is to be performed, or to specify a particular map website as the preferred source when a search under a "map search" category is to be performed). After a search by category is initiated, the user's preferred data source is initially searched (e.g. at 560), and results displayed as search result data to the user (e.g. at 590).

Accordingly, at 550, user preferences may be verified, and confirmation that the given external data source is the preferred source to be searched is made, in at least one embodiment. If the given external data source is not to be searched, then the flow of method acts will proceed to 580 [flow not explicitly shown] so that the next external data source may be considered.

In variant embodiments, the preferred source for one or more search categories may be defined by an administrator through a security policy (e.g. IT policy).

At 560, the universal search module passes the search term received at 510 to the registered application associated with the given external data source. The application is directed to query the external data source, using the search term received at 510 as search criteria, and return the results of the search to the universal search module. For example, if the given external source of data originates from a video sharing website, the search may return data that identifies videos having a title, artist name, or description that contains the search term.

The actual form of data returned from a data source may vary, depending on implementation. For example, a summary of a located item (e.g. description, listing) may be returned along with a list of available actions (e.g. open, play, forward). Each application associated with a data source can define the available actions for different data types when making its associated data searchable (e.g. during registration of the application with the universal search module).

In one embodiment, a local cache on the mobile device may be employed by the universal search module. Search results may be stored in the cache, and searching of the cached data rather than of the given external source directly may be performed at 560, in order to obtain search results more efficiently. A time-stamping or similar technique may be employed (e.g. identifying when the cached data was last updated) to ensure that the contents of the cache are not stale. The application may query the given external source at 560 rather than using the contents of the cache, if is determined that the contents of the cache are too "old".

At 570, search results obtained from the given external data source via the registered application are stored on the mobile device, and indexed to allow faster retrieval of data. The indexing of the data may be deferred to some later time (e.g. at device idle time), to minimize interference with other operations of the mobile device. A registered application may be configured to store the obtained data on the mobile device for a particular length of time or until some event occurs (e.g. the application receives a direction to delete the search results from storage on the mobile device), for example.

In at least one embodiment, actual content (e.g. videos, music tracks) that reside on external data sources will not be returned to the mobile device for storage. Instead, keywords describing the actual content and a reference to that content are returned by the search and stored on the device. The universal search module leaves it up to the registered application to decide what keywords are to be associated with the content.

At 580, it is determined whether there are any further external sources to be searched. If so, the flow of method acts proceeds back to 550.

At 590, search result data based on the results of searching one or more local data sources, one or more external data sources, or both, may be displayed to the user in the user interface provided by the universal search module.

The display of search result data at 590 may take on different forms. For example, the results of a search of a particular external data source may be presented initially in summary form. For example, the user may be notified of the number of hits that resulted from the search of this particular data source. A representative icon (e.g. a logo, if a commercial data source) accompanying the number of hits resulting from the search may also be displayed. Moreover, if the user subsequently selects the icon, a new screen displaying more detailed results of the search of the particular external data source may be displayed.

In some embodiments, search result data will be generated and displayed as the user types in a search keyword. The search result data may be presented in a variety of forms. Data returned from a data source may comprise metadata regarding the type, time, etc. associated with various data items. The universal search module can use this information when displaying results in the user interface. For example, different results may be grouped into a folder, or presented as a list or in some other format. The universal search module may display the results in a folder having the name of the application through which search data is retrieved. Contacts (e.g. as identified by contact data stored on the mobile device) may be displayed as individual items. Data retrieved from a data source associated with an application as a result of a search may be grouped inside a folder, labeled with the application name and the number of items contained in the folder. If a user of the mobile device were to click on the folder, items may be further displayed in a list, or in some other representation. Data may be provided using multiple pages. A user may also perform various other actions on search result data, depending on the data type. Selectable links may be provided in the user interface of the universal search module along with search results, allowing users to extend a search, to perform a search by category or search another specific external data source, for example. Other display configurations and navigation techniques of search result data are possible, in variant embodiments.

If the search result data being displayed is based on data that originates from multiple data sources (e.g. local, external, or both), then the results may be displayed in a grid-like summary format, in accordance with one embodiment. A representative icon, number of hits, and optionally, a description of the data source or a category associated with the search results, may be displayed for each data source represented in the grid. This layout (e.g. compared to a list format) may improve usability. Scroll bars, arrows, or other indicia may be displayed to indicate the existence of different "pages" of search result data that are not currently shown in the displayed grid, due to constraints imposed by the size of the display.

In a variant embodiment, the results presented in summary format may have been subject to grouping before their display. For example, if there are two data sources of music content to be represented, and each of the data sources have returned only a handful of hits, the results may be pre-consolidated and identified using one general "music" icon for display, with the combined number of hits identified to the user. This may improve usability.

Although FIG. 5 illustrates a particular flow of acts in the search of external data sources, it will be understood by persons skilled in the art that in variant embodiments, where there are multiple external data sources to be searched, the acts associated with the searching of the various data sources is not restricted to being performed sequentially, but may instead be performed concurrently.

Although not explicitly shown in FIG. 5, the flow of method acts may proceed back to 550, if searching of external data sources is desired after an initial set of search results have already been displayed.

For example, if at 540, it was determined that the external sources of data were not to be automatically searched, then the results displayed at 590 may initially only reflect data stored in local data sources. If the user, after considering the initial results, wishes to "extend" his or her search to include one or more additional external data sources, then the flow of method acts may proceed back to 550 so that the searches of one or more external data sources may be initiated. This "extended search" may be performed automatically for all registered external data sources, or only for particular external data sources as selected by a user or as may otherwise be preconfigured by the user or an administrator. In future iterations of method 500 where 590 is reached, the flow of method acts may proceed back to 550 again, if searching of additional external data sources is desired.

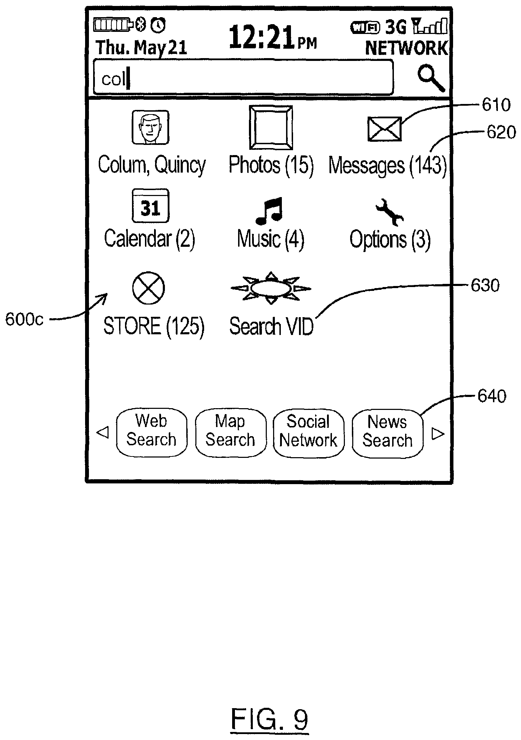

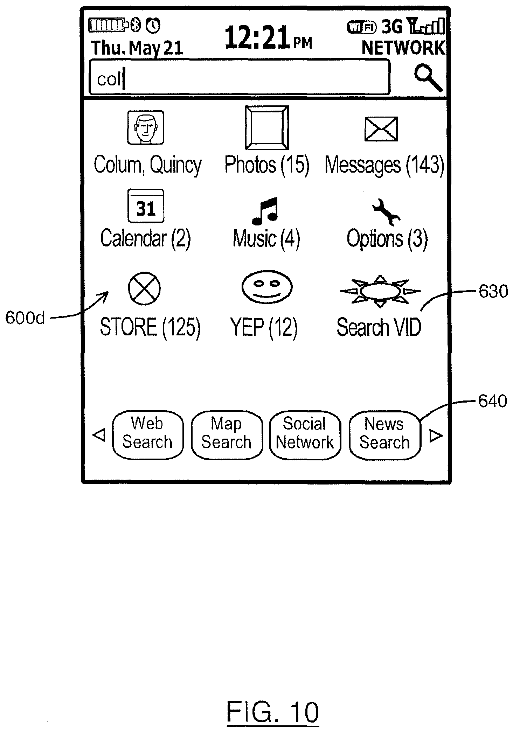

In at least one embodiment, an extended search may be performed after a user initiates a search by category. If the search by category is initiated after the search result data from a previous search has already been displayed (e.g. at 590), then the flow of method acts may proceed back to 550 so that one or more additional external data sources can be searched. The specific additional external data source(s) to be searched in response to the initiation of a search by category may depend on user preferences, as described above. The search by category would then be an extended search, which may be performed in response to the user selection of a category button displayed in the user interface provided by the universal search module (see e.g. FIGS. 9 and 10 below).

The results of the extended search may then be displayed in an updated screen. In one embodiment, a new icon that represents the external data source searched can be displayed in the updated screen, if an icon associated with that external data source is not already displayed. The number of hits located in the search by category can then be displayed with the corresponding icon. The updated search result data may be incorporated into the grid-like format for display, for example. Other formats are possible, in variant implementations.

In some embodiments, a search by category may also require that certain local data sources be searched. In that case, the flow of method acts may proceed from 590 to 530 for example (flow not shown) so that the local data sources may be searched.

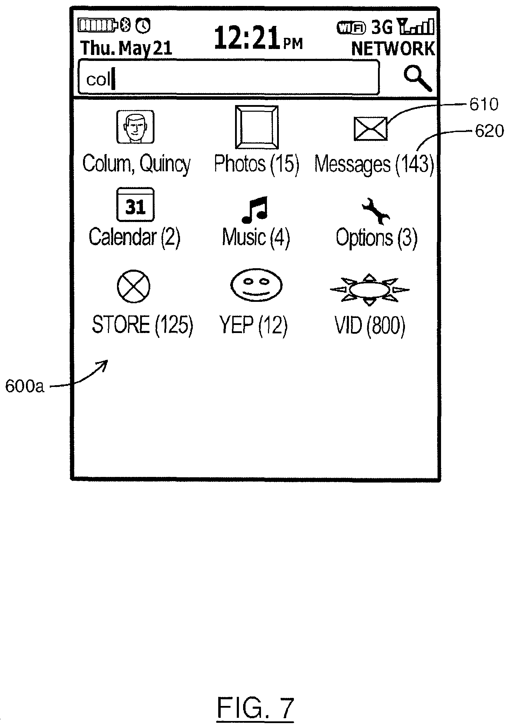

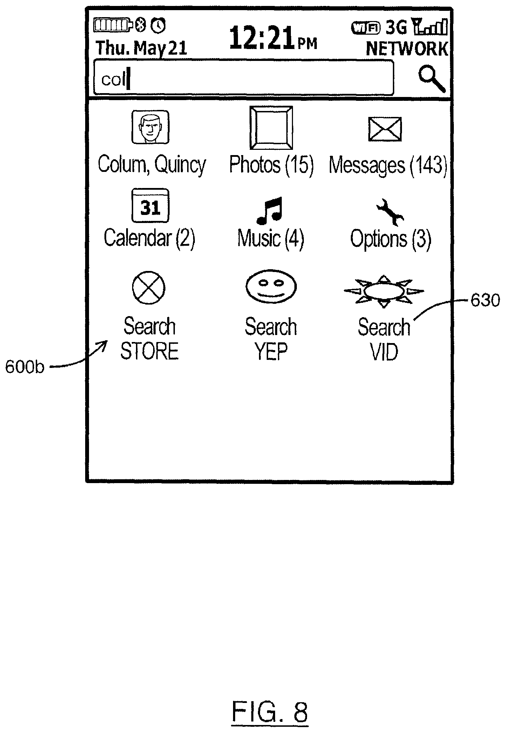

FIGS. 7 and 8 are example screen captures of the display of a mobile device as it displays search results in a user interface, in at least one example implementation. These screenshots are provided as examples, and other configurations of user interface elements are possible.

FIG. 7 shows a screen 600a in which a user has initiated a search in a universal search module using the term "col". The results in screen 600a are provided in a grid-like format, where each element of the grid comprises a representative icon 610, with a matching source description 620 and the number of hits based on the search term displayed underneath.

In this example, the icons associated with the sources "STORE", "YEP", and "VID" represent external sources of data associated with registered applications. In FIG. 7, the external sources were also searched, and the results of the search summarized in display 600a.

As previously noted, in at least one embodiment, results are presented as a user types in a search term. Furthermore, in at least one embodiment, results are presented initially only for data from local data sources (e.g. "on-device" contents). For data originating from an external data source (e.g. "off-device" contents), a user may be required to click on the icon, folder, or other representation of the data source in the user interface before the external data source is searched, in these embodiments.

For example, FIG. 8 shows a screen 600b, which is similar to screen 600a except that the search of external data sources was not performed using the search term "col". In this manner, the universal search module can perform a search of local data sources first, and then check with the user if an extended search that would result in a search of one or more of the external data sources is desired, before proceeding. This may conserve bandwidth and processor resources, in the event that the user ultimately deems that the search of the external data sources is not immediately necessary. In this example, the user may be provided with the option of selecting a particular displayed icon representing a specific external data source, in order to initiate a search of that external data source.

FIGS. 9 and 10 are example screen captures of the display of a mobile device as it displays search results in a user interface, in another example implementation. These screenshots are provided as examples, and other configurations of user interface elements are possible.

FIG. 9 shows a screen 600c in which a user had initiated a search in a universal search module using the term "col". The results in screen 600c are provided in a grid-like format, where each element of the grid comprises a representative icon 610, with a matching source description 620 and the number of hits based on the search term displayed underneath. In this example, the source "STORE" was searched, and an option to extend the search by searching the source "VID" is presented to the user.

Category buttons 640 are displayed to the user. In this embodiment, these buttons are displayed after a search of local data sources is performed. Each category button 640 provides the user with an option to extend the search, by performing a search by category. As described earlier herein, selecting a category button 640 may initiate a search of one or more external data sources that have been associated with the category identified by the selected category button 640.

In at least one embodiment, a preferred external data source may be associated with a given selected category, depending on user preferences, for example. If so, initiation of a search by the given category will cause that preferred external data source to be searched.

For example, FIG. 10 shows a screen 600d after the "web search" category was selected by the user. The external search engine "YEP", a preferred external data source that was associated with the "web search" category during a user configuration, was searched using the search term "col", and a new representative icon is displayed, with a corresponding description and number of hits.

Although FIGS. 9 and 10 depict that a search by category may be performed as an extended search for a given search term, i.e. after at least one search iteration has already been completed, it will be understood that a search by category may be initiated without a prior search having been completed. For example, the search term may be received from the user at 520 of FIG. 5, and a search by category initiated at that time. If the search by category does not involve searching local data sources (as may be defined in user settings), act 530 may be skipped, and method 500 may proceed directly with the remaining acts to search appropriate external data sources in performing the search by category.

Some of the acts of one or more methods described herein may be provided as software instructions, stored on computer-readable storage media and executable by a processor. Examples of computer-readable storage media may include a hard disk, a floppy disk, an optical disk (e.g. a compact disk, a digital video disk), a flash drive or flash memory, magnetic tape, and memory. Other configurations are possible as well.

In variant implementations, some of the acts of one or more methods described herein may be provided as executable software instructions stored in transmission media.

A number of embodiments have been described herein. However, it will be understood by persons skilled in the art that other variants and modifications may be made without departing from the scope of the claims appended hereto.

## Claims

1. A mobile wireless communications device comprising:
a display (18);
a memory (16) configured to store application data;
at least one input device (22); and
a processor (14) coupled to the memory (16), the display (18) and the at least one input device (22), and configured to open at least one application (310) on the mobile wireless communications device,
wherein the at least one application (310) is one or more of a personal information manager application, a secure communication application, an e-mail client application, a messaging application, a media application, a contact management application, and a calendar application, and
wherein the at least one application (310) is associated with a respective search data source (24, 26) of a plurality of search data sources (24, 26),
execute a universal search module (300) on the mobile wireless communications device,
wherein the at least one application (310) is registered with the universal search module (300), whereby the at least one application (310) makes data from a respective data source associated with the at least one application (310) available for search,
wherein the at least one application (310) permits users to search data managed by that application by opening the application and selecting a "search" option from a menu to initiate the search of the data managed by the application;
wherein the at least one application (310) registered with the universal search module (300) includes at least one given application that (i) is associated with a respective off-device search data source (24, 26) and (ii) sets its own access control privileges for its associated data at the time of being registered, whereby other registered applications on the mobile device are permitted to query the data of that given application based on how the access control privileges for the given application itself are set, and
the processor (14) further configured to
associate (34) each of a plurality of search categories with each of the plurality of search data sources (24, 26), based upon input received via the at least one input device (22), at least one of the plurality of search data sources (24, 26) comprising the application data, wherein the search data sources (24, 26) associated with one or more categories changes dynamically in response to a change in the location of the mobile device,
determine (36) via a matching algorithm a given search category of the plurality thereof associated with a search term input via the at least one input device (22), wherein the given search category is associated with one or more of the search data sources, the one or more search data sources comprising one or more off-device search data sources associated with the at least one registered application,
wherein the universal search module is configured to search (38) the search data sources (24, 26) associated with the given search category for the search term by calling upon the respective at least one application (310) to cause a search of the associated search data source (24, 26) and generate search results based thereupon, wherein the universal search module is configured to search only a strict subset of the off-device search data sources (24, 26) associated with the given search category and to display the search results on the display (18).

2. The mobile wireless communications device of claim 1, wherein the processor (14) is configured to determine the given search category associated with the search term by receiving input of the given search category via the at least one input device (22).

3. The mobile wireless communications device of claim 1, wherein at least one of the plurality of search data sources (24, 26) comprises a web search engine.

4. The mobile wireless communications device of claim 1, wherein at least one of the plurality of search data sources (24, 26) comprises a media search engine.

5. The mobile wireless communications device of claim 1, wherein at least one of the plurality of search data sources (24, 26) comprises a vendor search engine.

6. The mobile wireless communications device of claim 1, wherein the processor (14) is further configured to associate (40) at least one further search data source with at least one of the plurality of search categories, and to search (42) the at least one further data source for the search term based upon the at least one further search data source being associated with the given search category.

7. A method for searching a mobile wireless communications device (11) comprising a display (18), at least one input device (22), a memory (16) storing application data, and a processor (14) coupled to the display (18), the memory (16), and the at least one input device (22), the method comprising:
opening at least one application (310) on the mobile wireless communications device,
wherein the at least one application (310) is one or more of a personal information manager application, a secure communication application, an e-mail client application, a messaging application, a media application, a contact management application, and a calendar application, and
wherein the at least one application (310) is associated with a respective search data source (24, 26) of a plurality of search data sources (24, 26);
executing a universal search module (300) on the mobile wireless communications device,
wherein the at least one application (310) is registered with the universal search module (300), whereby the at least one application (310) makes data from a respective data source associated with the at least one application (310) available for search,
wherein the at least one application (310) permits users to search data managed by that application after having opened the application by selecting a "search" option from a menu to initiate the search of the data managed by the application;
wherein the at elast one application (310) registered with the universal search module (300) includes at least one given application that (i) is associated with a respective off-device search data source (24, 26) and (ii) sets its own access control privileges for its associated data at the time of being registered, whereby other registered applications on the mobile device are permitted to query the data of that given application based on how the access control privileges for the given application itself are set, and
the method further comprising
associating (34) each of a plurality of search categories with each of the plurality of search data sources (24, 26), based upon input received via the at least one input device (22), at least one of the plurality of search data sources (24, 26) comprising the application data, wherein the search data sources (24, 26) associated with one or more categories changes dynamically in response to a change in the location of the mobile device;
determining (36) via a matching algorithm a given search category of the plurality thereof associated with a search term input via the at least one input device (22), using the processor (14), wherein the given search category is associated with one or more of the search data sources, the one or more search data sources comprising one or more off-device search data sources associated with the at least one registered application; the method further comprising the universal search module
searching (38) the search data source (24, 26) associated with the given search category for the search term by the universal search module calling upon the respective at least one application (310) to cause a search of the associated search data source (24, 26) and generating search results based thereupon, using the processor (14), wherein the universal search module is configured to search only a strict subset of the off-device search data sources (24, 26) associated with the given search category; and
the universal search module displaying the search results on the display (18).

8. The method of claim 7, the given search category associated with the search term is determined by receiving input of the given search category via the at least one input device (22).

9. The method of claim 7, wherein at least one of the plurality of search data sources (24, 26) comprises a web search engine.

10. The method of claim 7, wherein at least one of the plurality of search data sources (24, 26) comprises a media search engine.

11. The method of claim 7, wherein at least one of the plurality of search data sources (24, 26) comprises a vendor search engine.

12. The method of claim 7, further comprising associating (40) at least one further search data source with at least one of the plurality of search categories, and searching (42) the at least one further data source for the search term based upon the at least one further search data source being associated with the given search category, using the processor (14).

## Patentansprüche

1. Mobile drahtlose Kommunikationsvorrichtung, umfassend:
eine Anzeige (18);
einen Speicher (16), der zum Speichern von Anwendungsdaten konfiguriert ist;
zumindest eine Eingabevorrichtung (22); und
einen Prozessor (14), der an den Speicher (16), die Anzeige (18) und die zumindest eine Eingabevorrichtung (22) gekoppelt ist und zum Öffnen von zumindest einer Anwendung (310) auf der mobilen drahtlosen Kommunikationsvorrichtung konfiguriert ist,
wobei die zumindest eine Anwendung (310) eine oder mehr einer persönlichen Informationsverwaltungsanwendung, einer sicheren Kommunikationsanwendung, einer E-Mail-Client-Anwendung, einer Messaging-Anwendung, einer Medienanwendung, einer Kontaktverwaltungsanwendung und einer Kalenderanwendung ist, und
wobei die zumindest eine Anwendung (310) mit einer jeweiligen Suchdatenquelle (24, 26) von mehreren Suchdatenquellen (24, 26) assoziiert ist, ein universelles Suchmodul (300) auf der mobilen drahtlosen Kommunikationsvorrichtung ausführt,
wobei die zumindest eine Anwendung (310) beim universellen Suchmodul (300) registriert ist, wobei die zumindest eine Anwendung (310) Daten aus einer jeweiligen Datenquelle, die mit der zumindest einen Anwendung (310) assoziiert ist, zur Suche verfügbar macht,
wobei es die zumindest eine Anwendung (310) Benutzern erlaubt, Daten, die durch diese Anwendung verwaltet werden, durch Öffnen der Anwendung und Auswählen einer "Suchen"-Option aus einem Menü zum Initiieren der Suche der Daten, die durch die Anwendung verwaltet werden, zu suchen;
wobei die zumindest eine Anwendung (310), die beim universellen Suchmodul (300) registriert ist, zumindest eine gegebene Anwendung enthält, die (i) mit einer jeweiligen Suchdatenquelle (24, 26) außerhalb der Vorrichtung assoziiert ist und (ii) ihre eigenen Zugangssteuerprivilegien für ihre assoziierten Daten zur Zeit der Registrierung einstellt, wodurch es anderen registrierten Anwendungen auf der mobilen Vorrichtung erlaubt ist, die Daten dieser gegebenen Anwendung darauf basierend, wie die Zugangssteuerprivilegien für die gegebene Anwendung selbst eingestellt sind, abzusuchen, und
wobei der Prozessor (14) ferner konfiguriert ist zum
Assoziieren (34) von jeder von mehreren Suchkategorien mit jeder der mehreren Suchdatenquellen (24, 26) basierend auf einer Eingabe, die über die zumindest eine Eingabevorrichtung (22) empfangen wird, wobei zumindest eine der mehreren Suchdatenquellen (24, 26) die Anwendungsdaten umfasst, wobei sich die Suchdatenquellen (24, 26), die mit einer oder mehr Kategorien assoziiert sind, dynamisch in Reaktion auf eine Änderung des Standorts der mobilen Vorrichtung ändern,
Bestimmen (36), über einen zusammenpassenden Algorithmus, einer gegebenen Suchkategorie der mehreren davon, die mit einer Suchbegriffeingabe über die zumindest eine Eingabevorrichtung (22) assoziiert ist, wobei die gegebene Suchkategorie mit einer oder mehr der Suchdatenquellen assoziiert ist, wobei die eine oder mehr Suchdatenquellen eine oder mehr Suchdatenquellen außerhalb der Vorrichtung umfassen, die mit der zumindest einen registrierten Anwendung assoziiert sind,
wobei das universelle Suchmodul zum Suchen (38) der Suchdatenquellen (24, 26), die mit der gegebenen Suchkategorie für den Suchbegriff assoziiert sind, durch Aufrufen der jeweiligen, zumindest einen Anwendung (310) zum Verursachen einer Suche der assoziierten Suchdatenquelle (24, 26) und Erstellen von Suchergebnissen auf der Grundlage davon konfiguriert ist, wobei das universelle Suchmodul zum Suchen von nur einem strikt abgegrenzten Teilsatz der Suchdatenquellen (24, 26) außerhalb der Vorrichtung, der mit der gegebenen Suchkategorie assoziiert ist, und Anzeigen der Suchergebnisse auf der Anzeige (18) konfiguriert ist.

2. Mobile drahtlose Kommunikationsvorrichtung nach Anspruch 1, wobei der Prozessor (14) zum Bestimmen der gegebenen Suchkategorie, die mit dem Suchbegriff assoziiert ist, durch Empfangen einer Eingabe der gegebenen Suchkategorie über die zumindest eine Eingabevorrichtung (22) konfiguriert ist.

3. Mobile drahtlose Kommunikationsvorrichtung nach Anspruch 1, wobei zumindest eine der mehreren Suchdatenquellen (24, 26) eine Web-Suchmaschine umfasst.

4. Mobile drahtlose Kommunikationsvorrichtung nach Anspruch 1, wobei zumindest eine der mehreren Suchdatenquellen (24, 26) eine Mediensuchmaschine umfasst.

5. Mobile drahtlose Kommunikationsvorrichtung nach Anspruch 1, wobei zumindest eine der mehreren Suchdatenquellen (24, 26) eine Anbietersuchmaschine umfasst.

6. Mobile drahtlose Kommunikationsvorrichtung nach Anspruch 1, wobei der Prozessor (14) ferner zum Assoziieren (40) von zumindest einer weiteren Suchdatenquelle mit zumindest einer der mehreren Suchkategorien und zum Absuchen (42) der zumindest einen weiteren Suchdatenquelle nach dem Suchbegriff basierend auf der zumindest einen weiteren Suchdatenquelle, die mit der gegebenen Suchkategorie assoziiert ist, konfiguriert ist.

7. Verfahren zum Absuchen einer mobilen drahtlosen Kommunikationsvorrichtung (11), die eine Anzeige (18), zumindest eine Eingabevorrichtung (22), einen Speicher (16), der Anwendungsdaten speichert, und einen Prozessor (14) umfasst, der an die Anzeige (18), den Speicher (16) und die zumindest eine Eingabevorrichtung (22) gekoppelt ist, das Verfahren umfassend:
Öffnen von zumindest einer Anwendung (310) auf der mobilen drahtlosen Kommunikationsvorrichtung,
wobei die zumindest eine Anwendung (310) eine oder mehr einer persönlichen Informationsverwaltungsanwendung, einer sicheren Kommunikationsanwendung, einer E-Mail-Client-Anwendung, einer Messaging-Anwendung, einer Medienanwendung, einer Kontaktverwaltungsanwendung und einer Kalenderanwendung ist, und
wobei die zumindest eine Anwendung (310) mit einer jeweiligen Suchdatenquelle (24, 26) von mehreren Suchdatenquellen (24, 26) assoziiert ist,
Ausführen eines universellen Suchmoduls (300) auf der mobilen drahtlosen Kommunikationsvorrichtung,
wobei die zumindest eine Anwendung (310) beim universellen Suchmodul (300) registriert ist, wobei die zumindest eine Anwendung (310) Daten aus einer jeweiligen Datenquelle, die mit der zumindest einen Anwendung (310) assoziiert ist, zur Suche verfügbar macht,
wobei es die zumindest eine Anwendung (310) Benutzern erlaubt, Daten, die durch diese Anwendung verwaltet werden, nach dem Öffnen der Anwendung durch Auswählen einer "Suchen"-Option aus einem Menü zum Initiieren der Suche der Daten, die durch die Anwendung verwaltet werden, zu suchen;
wobei die zumindest eine Anwendung (310), die beim universellen Suchmodul (300) registriert ist, zumindest eine gegebene Anwendung enthält, die 1) mit einer jeweiligen Suchdatenquelle (24, 26) außerhalb der Vorrichtung assoziiert ist und 2) ihre eigenen Zugangssteuerprivilegien für ihre assoziierten Daten zur Zeit der Registrierung einstellt, wodurch es anderen registrierten Anwendungen auf der mobilen Vorrichtung erlaubt ist, die Daten dieser gegebenen Anwendung darauf basierend, wie die Zugangssteuerprivilegien für die gegebene Anwendung selbst eingestellt sind, abzusuchen, und
wobei das Verfahren ferner umfasst:
Assoziieren (34) von jeder von mehreren Suchkategorien mit jeder der mehreren Suchdatenquellen (24, 26) basierend auf einer Eingabe, die über die zumindest eine Eingabevorrichtung (22) empfangen wird, wobei zumindest eine der mehreren Suchdatenquellen (24, 26) die Anwendungsdaten umfasst, wobei sich die Suchdatenquellen (24, 26), die mit einer oder mehr Kategorien assoziiert sind, dynamisch in Reaktion auf eine Änderung des Standorts der mobilen Vorrichtung ändern;
Bestimmen (36), über einen zusammenpassenden Algorithmus, einer gegebenen Suchkategorie der mehreren davon, die mit einer Suchbegriffeingabe über die zumindest eine Eingabevorrichtung (22) assoziiert ist, wobei die gegebene Suchkategorie mit einer oder mehr der Suchdatenquellen assoziiert ist, wobei die eine oder mehr Suchdatenquellen eine oder mehr Suchdatenquellen außerhalb der Vorrichtung umfassen, die mit der zumindest einen registrierten Anwendung assoziiert sind; wobei das Verfahren ferner umfasst, dass das universelle Suchmodul
die Suchdatenquellen (24, 26), die mit der gegebenen Suchkategorie für den Suchbegriff assoziiert sind, dadurch sucht (38), dass das universelle Suchmodul die jeweilige, zumindest eine Anwendung (310) zum Verursachen einer Suche der assoziierten Suchdatenquelle (24, 26) aufruft und Suchergebnisse auf der Grundlage davon unter Benutzung des Prozessors (14) erstellt, wobei das universelle Suchmodul zum Suchen von nur einem strikt abgegrenzten Teilsatz der Suchdatenquellen (24, 26) außerhalb der Vorrichtung, der mit der gegebenen Suchkategorie assoziiert ist, konfiguriert ist; und
wobei das universelle Suchmodul die Suchergebnisse auf der Anzeige (18) anzeigt.

8. Verfahren nach Anspruch 7, wobei die gegebene Suchkategorie, die mit dem Suchbegriff assoziiert ist, durch Empfangen einer Eingabe der gegebenen Suchkategorie über die zumindest eine Eingabevorrichtung (22) bestimmt wird.

9. Verfahren nach Anspruch 7, wobei zumindest eine der mehreren Suchdatenquellen (24, 26) eine Web-Suchmaschine umfasst.

10. Verfahren nach Anspruch 7, wobei zumindest eine der mehreren Suchdatenquellen (24, 26) eine Mediensuchmaschine umfasst.

11. Verfahren nach Anspruch 7, wobei zumindest eine der mehreren Suchdatenquellen (24, 26) eine Anbietersuchmaschine umfasst.

12. Verfahren nach Anspruch 7, ferner umfassend Assoziieren (40) von zumindest einer weiteren Suchdatenquelle mit zumindest einer der mehreren Suchkategorien und zum Absuchen (42) der zumindest einen weiteren Suchdatenquelle nach dem Suchbegriff basierend auf der zumindest einen weiteren Suchdatenquelle, die mit der gegebenen Suchkategorie assoziiert ist, unter Benutzung des Prozessors (14).

## Revendications

1. Dispositif de communication mobile sans fil comprenant :
un écran (18);
une mémoire (16) configurée pour mémoriser des données d'application ;
au moins un dispositif de saisie (22); et
un processeur (14) couplé à la mémoire (16), l'écran (18) et au moins un dispositif de saisie (22), et configuré pour ouvrir au moins une application (310) sur le dispositif de communication sans fil,
dans lequel la au moins une application (310) est une ou plusieurs parmi une application de gestionnaire d'informations personnelles, une application de communication sécurisée, une application client de messagerie, une application de messagerie, une application média, une application de gestion de contacts et une application de calendrier, et
dans lequel la au moins une application (310) est associée à une source de données de recherche respective (24, 26) d'une pluralité de sources de données de recherche (24, 26),
exécuter un module de recherche universelle (300) sur le dispositif de communication sans fil mobile,
dans lequel la au moins une application (310) est enregistrée auprès du module de recherche universelle (300), moyennant quoi la au moins une application (310) crée des données à partir d'une source de données associée à au moins une application (310) disponible pour la recherche,
dans lequel la au moins une application (310) permet à des utilisateurs de rechercher des données gérées par cette application en ouvrant l'application et en sélectionnant une option de « recherche » à partir d'un menu pour lancer la recherche des données gérées par l'application ;
dans lequel la au moins une application (310) enregistrée auprès du module de recherche universelle (300) comprend au moins une application donnée qui (i) est associée à une source de données de recherche hors dispositif respective (24, 26) et (ii) établit ses propres privilèges de contrôle d'accès pour ses données associées au moment de l'enregistrement, moyennant quoi d'autres applications enregistrées sur l'dispositif mobile sont autorisées à interroger les données de cette application donnée en fonction de la manière dont les privilèges de contrôle d'accès pour l'application donnée elle-même sont définis, et
le processeur (14) étant en outre configuré pour associer (34) chacune d'une pluralité de catégories de recherche à chacune de la pluralité de sources de données de recherche (24, 26), sur la base d'une saisie reçue via le au moins un dispositif de saisie (22), au moins une de la pluralité de sources de données de recherche (24, 26) comprenant les données d'application, dans lequel les sources de données de recherche (24, 26) associées à une ou plusieurs catégories changent dynamiquement en réponse à un changement de localisation du dispositif mobile, déterminer (36) via un algorithme de mise en correspondance une catégorie de recherche donnée de la pluralité de ceux-ci étant associée à un terme de recherche entré via le au moins un dispositif de saisie (22), dans lequel la catégorie de recherche donnée est associée à une ou plusieurs des sources de données de recherche, la ou les sources de données de recherche comprenant une ou plusieurs des sources de données de recherche de dispositif associées à la au moins une application enregistrée,
dans lequel le module de recherche universelle est configuré pour rechercher (38) les sources de données de recherche (24, 26) associées à la catégorie de recherche donnée pour le terme de recherche en appelant au moins une application (310) respective pour provoquer une recherche la source de données de recherche associée (24, 26) et générer des résultats de recherche sur cette base, dans lequel le module de recherche universelle est configuré pour rechercher uniquement un sous-ensemble strict des sources de données de recherche hors dispositif (24, 26) associées à la catégorie de recherche donnée et afficher les résultats de la recherche sur l'écran (18) .

2. Dispositif de communication mobile sans fil selon la revendication 1, dans lequel le processeur (14) est configuré pour déterminer la catégorie de recherche donnée associée au terme de recherche en recevant une saisie de la catégorie de recherche donnée via au moins un dispositif de saisie (22).

3. Dispositif de communication mobile sans fil selon la revendication 1, dans lequel au moins une de la pluralité de sources de données de recherche (24, 26) comprend un moteur de recherche Web.

4. Dispositif de communication mobile sans fil selon la revendication 1, dans lequel au moins une de la pluralité de sources de données de recherche (24, 26) comprend un moteur de recherche multimédia.

5. Dispositif de communication mobile sans fil selon la revendication 1, dans lequel au moins une de la pluralité de sources de données de recherche (24, 26) comprend un moteur de recherche de fournisseur.

6. Dispositif de communication mobile sans fil selon la revendication 1, dans lequel le processeur (14) est en outre configuré pour associer (40) au moins une autre source de données de recherche à au moins une de la pluralité de catégories de recherche, et pour rechercher (42) la au moins une autre source de données pour le terme de recherche sur la base d'au moins une autre source de données de recherche étant associée à la catégorie de recherche donnée.

7. Procédé de recherche d'un dispositif de communication sans fil mobile (11) comprenant un écran (18), au moins un dispositif de saisie (22), une mémoire (16) mémorisant des données d'application, et un processeur (14) couplé à l'écran (18), la mémoire (16), et le au moins un dispositif de saisie (22), le procédé comprenant de:
ouvrir au moins une application (310) sur le dispositif mobile de communication sans fil,
dans lequel la au moins une application (310) est une ou plusieurs d'une application de gestion d'informations personnelles, une application de communication sécurisée, une application cliente de messagerie, une application de messagerie, une application multimédia, une application de gestion de contacts et une application de calendrier, et
dans lequel la au moins une application (310) est associée à une source de données de recherche respective (24, 26) d'une pluralité de sources de données de recherche (24, 26);
exécuter un module de recherche universelle (300) sur le dispositif de communication mobile sans fil, dans lequel la au moins une application (310) est enregistrée auprès du module de recherche universelle (300), moyennant quoi la au moins une application (310) rend les données d'une source de données respective associée à la au moins une application (310) disponibles pour la recherche, dans lequel la au moins une application (310) permet aux utilisateurs de rechercher des données gérées par cette application après avoir ouvert l'application en sélectionnant une option de « recherche » dans un menu pour lancer la recherche des données gérées par l'application ;
dans lequel la au moins une application (310) enregistrée auprès du module de recherche universelle (300) comprend au moins une application donnée qui (i) est associée à une source de données de recherche hors dispositif respective (24, 26) et (ii) établit ses propres privilèges de contrôle d'accès pour ses données associées au moment de l'enregistrement, moyennant quoi d'autres applications enregistrées sur le dispositif mobile sont autorisées à interroger les données de cette application donnée en fonction de la manière dont les privilèges de contrôle d'accès pour l'application donnée elle-même sont définis, et
le procédé comprenant en outre de
associer (34) chacune d'une pluralité de catégories de recherche à chacune de la pluralité de sources de données de recherche (24, 26), sur la base d'une saisie reçue via au moins un dispositif de saisie (22), au moins une de la pluralité de sources de données de recherche (24, 26) comprenant les données d'application, dans lequel les sources de données de recherche (24, 26) associées à une ou plusieurs catégories changent dynamiquement en réponse à un changement de localisation du dispositif mobile ;
déterminer (36) via un algorithme de mise en correspondance une catégorie de recherche donnée parmi la pluralité de celles-ci associée à un terme de recherche entré via le au moins un dispositif de saisie (22), en utilisant le processeur (14), dans lequel la catégorie de recherche donnée est associée à une ou plusieurs des sources de données de recherche, la ou les sources de données de recherche comprenant une ou plusieurs sources de données de recherche hors dispositif associées à au moins une demande enregistrée ;
le procédé comprenant en outre par le module de recherche universelle de
rechercher (38) la source de données de recherche (24, 26) associée à la catégorie de recherche donnée pour le terme de recherche par le module de recherche universelle appelant la au moins une application respective (310) pour provoquer une recherche des données de recherche associées source (24, 26) et générer des résultats de recherche basés sur celle-ci, en utilisant le processeur (14), dans lequel le module de recherche universelle est configuré pour rechercher uniquement un sous-ensemble strict des sources de données de recherche hors dispositif (24, 26) associées à la catégorie de recherche donnée ; et
afficher par le module de recherche universelle les résultats de la recherche sur l'écran (18).

8. Procédé selon la revendication 7, la catégorie de recherche donnée associée au terme de recherche est déterminée en recevant une saisie de la catégorie de recherche donnée via le au moins un dispositif de saisie (22).

9. Procédé selon la revendication 7, dans lequel au moins une de la pluralité de sources de données de recherche (24, 26) comprend un moteur de recherche Web.

10. Procédé selon la revendication 7, dans lequel au moins une de la pluralité de sources de données de recherche (24, 26) comprend un moteur de recherche multimédia.

11. Procédé selon la revendication 7, dans lequel au moins une de la pluralité de sources de données de recherche (24, 26) comprend un moteur de recherche de fournisseur.

12. Procédé selon la revendication 7, comprenant en outre l'association (40) d'au moins une autre source de données de recherche avec au moins une de la pluralité de catégories de recherche, et la recherche (42) d'au moins une autre source de données pour le terme de recherche sur la base d'au moins une autre source de données de recherche étant associée à la catégorie de recherche donnée, en utilisant le processeur (14).
